# EUROPEAN PATENT SPECIFICATION

(11) **EP 1 638 223 B1**
(45) Date of publication and mention of the grant of the patent: **17.05.2017**
(21) Application number: 04738167.8
(22) Date of filing: 21.05.2004
(51) Int. Cl.: H04B 10/00, H04J 3/06

(54) **A VIRTUAL CONCATENATION DELAY COMPENSATION RESUMABLE APPARATUS**
RESUMIERBARE VORRICHTUNG ZUR VIRTUELLEN VERKETTUNGS-VERZÖGERUNGSKOMPENSATION
APPAREIL DE REPRISE DE COMPENSATION DE RETARD DE CONCATENATION VIRTUELLE

(30) Priority: 23.05.2003 CN 03131585
(43) Date of publication of application: 22.03.2006
(73) Proprietor: ZTE Corporation, 518057 Shenzhen City, Guangdong Province (CN)
(72) Inventor: ZHAO, Fuchuan, Shenzhen, Guangdong 518057 (CN); LI, Zhengqi, Shenzhen, Guangdong 518057 (CN)
(74) Representative: Bugnion Genève
(86) International application number: PCT/CN2004/000518
(87) International publication number: WO 2004/105274

(56) References cited:
- EP-A2- 1 176 745
- GB-A- 2 378 866
- US-A1- 2002 176 450
- US-A1- 2003 043 851
- US-A1- 2003 095 563
- SGI G ET AL: "SDH virtual concatenation technique used in ethernet data transport", COMMUNICATIONS, CIRCUITS AND SYSTEMS AND WEST SINO EXPOSITIONS, IEEE 2 002 INTERNATIONAL CONFERENCE ON JUNE 29 - JULY 1, 2002, PISCATAWAY, NJ, USA,IEEE, vol. 2, 29 June 2002 (2002-06-29), pages 1784-1787, XP010631865, ISBN: 978-0-7803-7547-5
- CHOY L: "VIRTUAL CONCATENATION TUTORIAL: ENHANCING SONET/SDH NETWORKS FOR DATA TRANSPORT", JOURNAL OF OPTICAL NETWORKING, XX, XX, vol. 1, no. 1, 1 January 2002 (2002-01-01) , pages 18-29, XP001096527,

## Description

### Technical Field of the Invention

The present invention relates to Synchronous Digital Hierarchy (SDH) transmission network, and in particular, to an apparatus for compensating and restoring the delay generated when data is transmitted using virtual concatenation technology.

### Background of the Invention

With the development of the information technology and the huge demand for communication bandwidth, the communication network is changing from analog network to digital network, the development of the fiber technology has greatly improved the development of digital communication technology and people's need for communication bandwidth is satisfied. The fiber communication provides low cost and high-speed information services and rapidly takes the place of the traditional copper wire communication. In order to adapt to the development of the fiber technology, unifying the products of various communication manufactures and realize interworking of transmission information, the International Telecommunication Union has established a SDH communication standard. A SDH frame information structure has abundant overhead byte, which brings convenience to information transmission and network management, while the unified interface parameters enables the equipment of different manufactures to work together in one network to realize interworking of regional or even global communication network. These advantages have made the SDH based transmission network the main direction of the construction of optical communication network. Since the original communication network is mainly a Plesiochronous Digital Hierarchy (PDH) network, to reduce the construction cost of the network and make better use of the original network, SDH specifies a series of mapping mode and mapping structure, so that a PDH signal can transmit in a SDH network. This adapts to the requirements of the telecommunication services with fixed rate, such as telephone and television.

As to the SDH network itself, it utilizes a time division multiplex point-to-point transmission mode and specifies several different fixed transmission rates. Over the past several years, the traditional telecommunication services enter into a slowly increasing period and their profit rate are continuously decreasing, but the data services are rapidly developing and people have strong demand for data services, however, the establishment of a fully digital network needs high investment and long period. Therefore, it is a more suitable manner to make full use of the existing SDH network resources to realize high-speed, large capacity and long-distance data transmission.

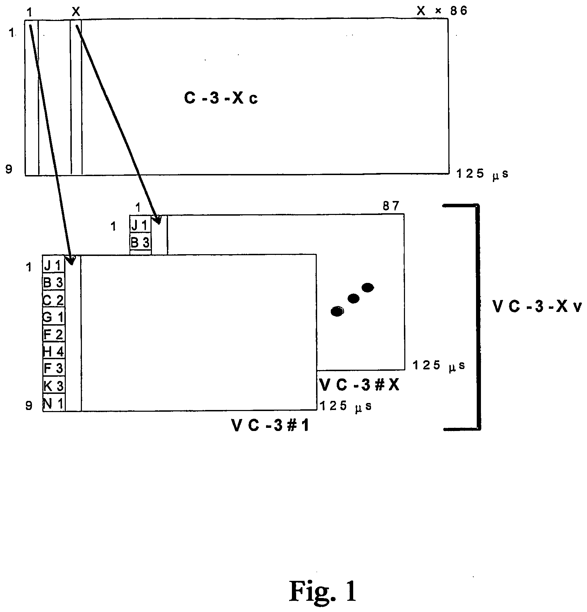

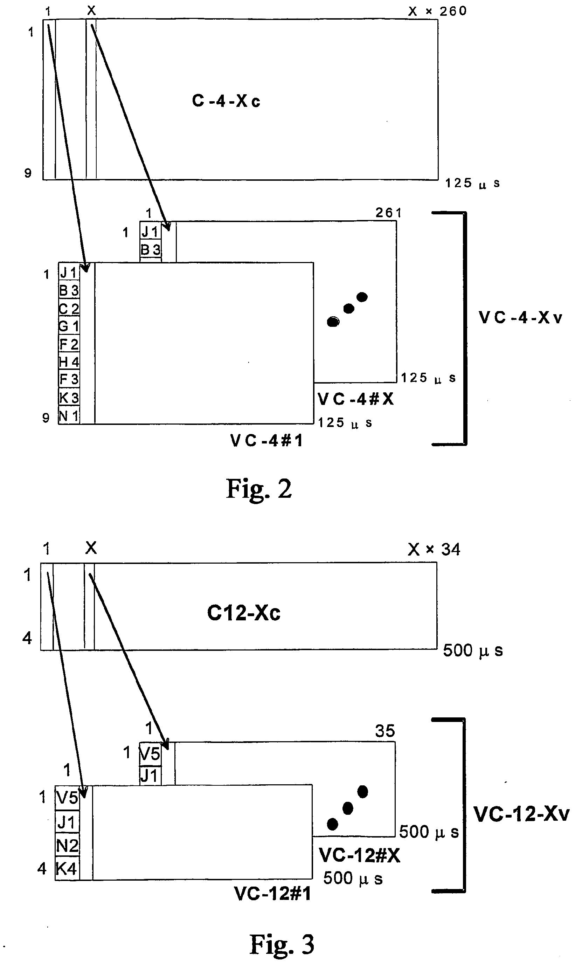

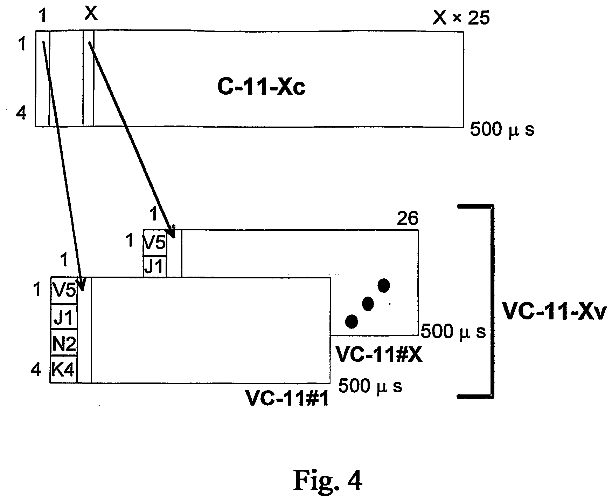

Since the characteristic of the data service (burst and the bandwidth can change), to adapt to the need of the data service, the concept of concatenation is introduced in SDH. The so-called concatenation refers to combine a plurality of homogeneous containers together to transmit a rate service that has a rate between two SDH standard containers; the so-called virtual concatenation refers to a logical concatenation relationship and is independent of the specific transmit path of the containers concatenated together. Fig 1, 2, 3 and 4 illustrates the virtual concatenation diagrams of several types of containers, where X represents the number of containers within the concatenated group. By virtual concatenation, the SDH network now remains unchanged with respect to how to transmit this kind of container previously, which ensures the compatibility with the existing SDH network.

US 2003/095563 A1 discloses an alignment logic together with an MFI extractor are adapted to compensate for differential delays.

SGI G ET AL: "SDH virtual concatenation technique used in ethernet data transport", COMMUNICATIONS, CIRCUITS AND SYSTEMS AND WEST SINO EXPOSITIONS, IEEE 2 002 INTERNATIONAL CONFERENCE ON JUNE 29 - JULY 1, 2002, PISCATAWAY, NJ, USA, IEEE, vol. 2, 29 June 2002 (2002-06-29), pages 1784-1787, XP010631865, ISBN: 978-0-7803-7547-5, discloses to utilize Virtual Concatenation technique to 'right-size' the SDH pipes for Ethernet - transport Gigabit Ethernet data using a group of virtually concatenated STS-1 timeslots within a 2.5Gbps SDH carrier.

To utilize the limited bandwidth effectively, the concept of virtual concatenated transmission introduced by SDH is a mechanism that logically bundles a plurality of homogeneous containers together to transmit services. Physically, the transmission manner of these containers do not have any difference with the original manner, but in actual operation, the logically bundled containers are sent simultaneously at sending terminal and this will generate different delay due to the different transmission
paths. Therefore, the receiving terminal needs to employ a delay compensation method so that the receiving terminal can restore the services normally. In addition, due to various reasons, the SDH does not always operate at synchronous state, that is, the clock reference at which the sending terminal and the receiving terminal works are not identical. This will cause pointer adjustment of the SDH, thereby the phase of the container arrived at the receiving terminal will drift and may cause the delay restoration circuit to work abnormally. In addition, various abnormalities may occur during operation of the SDH transmission network.

### Summary of the Invention

The technical problem to be solved by the invention is to provide a virtual concatenation delay compensation and restoration apparatus, realize reliable automatic restoration of concatenated service and achieve minimum delay output.

The virtual concatenation delay compensation and restoration apparatus of the present invention comprises a concatenated multi-frame detecting circuit, a concatenated sequence automatic adjusting circuit, a buffer, a write control circuit, a read control relocating and adaptive circuit, and a read control circuit; wherein: said concatenated multi-frame detecting circuit is configured to detect the locking of the concatenated multi-frame indicator of a SDH frame, and to detect the concatenated indicator of a container; said concatenated sequence automatic adjusting circuit is configured to adjust the sequence of the container according to the concatenated indicator of each container, such that the sequence of the container coincides with the sequence at the sending terminal; said buffer is partitioned according to the container and the concatenated multi-frame indicator of the SDH frame and is configured to buffer the data frames that arrive first within the concatenated SDH frames; said write control circuit is configured to write the SDH frames within the containers for which sequences have been adjusted into said buffer based on the current concatenated multi-frame indicator of the SDH frame in each container; said read control relocating and adaptive circuit is configured to adjust the frequency and phase of a container; said read control circuit is configured to read the SDH frames from said buffer to complete the restoration of concatenation according to the signal outputted by said read control relocating and adaptive circuit.

Said concatenated multi-frame detecting circuit detects whether the concatenated multi-frame indicator of the SDH frame in each container within a concatenation group is continuous, if so, determines the current concatenated multi-frame indicator of the SDH frames in the container.

Said concatenated multi-frame detecting circuit also performs concatenation cross-border detection, that is, detects the maximal difference between the current concatenated multi-frame indicators of the SDH frame in different containers in a concatenation group, thereby determining whether the buffer set can meet the requirement.

Said concatenated multi-frame detecting circuit detects data signal, K4 overhead location indication signal or H4 overhead location indication signal, and detects whether there is an abnormal indication signal, determines the lock state of the concatenated multi-frame indicator, and detects the concatenated indicator of each container according to the K4 byte or H4 byte.

When detecting the concatenated indicator of each container, if there are three consecutive identical concatenated indicators, said concatenated multi-frame detecting circuit determines that said concatenated indicator is the concatenated indicator of the container.

When determining the lock state of a concatenated multi-frame indicator, if it is a low order container, said concatenated multi-frame detecting circuit detects whether there is a multi-frame allocate sequence in the K4 overhead, if a multi-frame allocate sequence is detected, then continues to detect whether the concatenated multi-frame indicator in bit2 of the K4 byte is continuous, where continuous represents locked; if not continuous, then the concatenated multi-frame indicator of the container is not locked; if multi-frame allocate sequence (MFAS) is not found in 64 consecutive K4 bytes, it is considered that the pattern of the K4 byte is incorrect, which represents that the concatenated multi-frame indicator of the container is not locked.

When determining the lock state of a concatenated multi-frame indicator, if it is a high order container, said concatenated multi-frame detecting circuit detects whether the concatenated multi-frame indicator in H4 byte is continuous, if the concatenated multi-frame indicators of three consecutive frames are not continuous, then it is considered that the concatenated multi-frame indicators are not locked; if the concatenated multi-frame indicators of three consecutive frames are continuous, then the concatenated multi-frame indicators are locked.

If said concatenated multi-frame detecting circuit detects an abnormal indication signal in any one of the containers or detects that the concatenated multi-frame indicators are not locked, then it is considered that the concatenated multi-frame indicators of the whole concatenation group are not locked.

Said concatenated sequence automatic adjusting circuit utilizes a space division cross-matrix and outputs the concatenated indicators of the adjusted containers in a given order based on the inputted concatenated indicators of the C-4 container.

Said concatenated sequence automatic adjusting circuit utilizes a time division cross-matrix and outputs the concatenated indicators of the adjusted containers in a given order based on the inputted concatenated indicators of the C-3, C-12 or C-11 container.

Said cross-matrix utilizes an automatic configuration, that is, utilizes a hardware circuit to directly realize the cross-matrix according to the concatenated indicator, in particular: a switch circuit is employed, if the concatenated multi-frame indicators of the whole concatenation group are not locked, then the overall switch circuit is reset; if entering into locked state, then the indicators are sorted in an ascending order according to the concatenated indicators of the containers in the concatenation group, and the sort result is used to control the switch circuit to accomplish automatic sorting of the container.

Said read control relocating and adaptive circuit also detects the state of the transmission link, when every one of the container within the concatenation group has resumed from abnormity, it re-determines the starting address to read buffer data.

Said read control relocating and adaptive circuit completes state adjustment via a state machine, said state machine has three states: search, compare and adjust, its state transition manner is: whatever the current state is, if there is a warning, it enters into search state to search the initial state of the concatenation group and sends a reset signal to the read control circuit, when the warning disappears, it goes into compare state; in compare state, it compares the write address of the current container with the current read address, if the difference between said write and read addresses exceeds a threshold, it goes into adjust state; the adjust state sends an adjust signal to the read control circuit and then goes into compare state.

Said read control circuit generates read data enable signal of each container according to the SDH frame structure and the category of the container, the format of the read address is (concatenated indicator, concatenated multi-frame indicator, offset), each time one byte of data is read out, the offset increments by one, when it reaches the maximal value of the container, the offset resets.

Said read control circuit re-initializes the starting address to read data after it receives the reset signal sent by said read control relocating and adaptive circuit.

Said read control circuit generates an adjust operation after it receives the adjust signal sent by said read control relocating and adaptive circuit, there are two kinds of adjustment: positive adjustment and negative adjustment; for a low order container, said positive adjustment refers to stop to read one byte of data at one position after the V3 in each TU12 structure; said negative adjustment refers to read one byte of data at the position of V3 in each TU12 structure; and for a high order container, said positive adjustment refers to consecutively stop to read three bytes of data after the position of H3; said negative adjustment refers to read one byte of data at the position of each H3.

The present invention utilizes a technology of virtual concatenated automatic failure detection and restoration, automatic sequence adjustment and automatic phase tracing, can realize reliable automatic restoration of virtual concatenation and greatly reduces output delay. When the network is asynchronous, the automatic tracing feature of the invention can detect whether the network delay has exceeded the setting requirement, which further improves the reliability of the network.

### Brief Description of the Drawings

Fig 1 is a virtual concatenation diagram of a VC-3 container;
Fig 2 is a virtual concatenation diagram of a VC-4 container;
Fig 3 is a virtual concatenation diagram of a VC-12 container;
Fig 4 is a virtual concatenation diagram of a VC-11 container;
Fig 5 is a diagram of a virtual concatenation delay compensation and restoration apparatus of the invention;
Fig 6 is a transmission pattern of bit1 in K4 overhead when a low order container performs concatenation;
Fig 7 is a transmission pattern of bit2 in K4 overhead when a low order container performs concatenation;
Fig 8 is a state transition diagram of the read control relocating and adaptive circuit 5 in Fig 5.

### Detailed Description of the Preferred Embodiments

The present invention will be described in detail below according to accompany drawings and embodiments. Fig 1 to Fig 4 illustrates the virtual concatenation diagram of a VC-3, VC-4, VC-12 and VC-11 container, which has be described in the Background of the Invention and will not be repeated here for brevity.

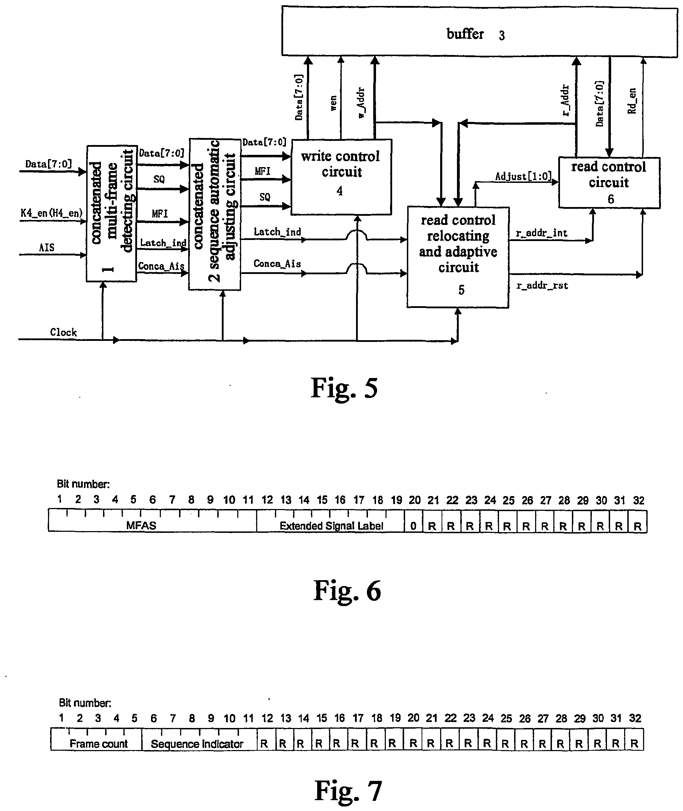

As shown in Fig 5, the virtual concatenation delay compensation and restoration apparatus of the present invention comprise a concatenated multi-frame detecting circuit 1, a concatenated sequence automatic adjusting circuit 2, a buffer 3, a write control circuit 4, a read control relocating and adaptive circuit 5, and a read control circuit 6.

The concatenated multi-frame detecting circuit 1 detects the locking of the concatenated multi-frame indicator (MFI) and detects the concatenated indicator (SQ) of a container. The concatenated multi-frame detecting circuit 1 detects whether the concatenated multi-frame indicator (MFI) of the SDH frame in each container within a concatenation group is continuous, if so, determines the current concatenated multi-frame indicator (MFI) of the SDH frame in the container. The concatenated multi-frame detecting circuit 1 also performs concatenation cross-border detection, that is, detects the maximal difference between the current concatenated multi-frame indicators (MFI) of the SDH frame in different containers in a concatenation group, thereby determining whether the buffer set can meet the requirement, in particular: the concatenated multi-frame detecting circuit 1 polls each frame, assume there are N containers in the concatenation group in buffer 3, and the size of buffer 3 is M times of the size of the container, then on average each container is allocated M/N of buffer 3. If in the overall SDH frame structure, the current concatenated multi-frame indicators (MFI) of a container equals to M/N, then records the maximal concatenated multi-frame indicators (MFI) and the minimal concatenated multi-frame indicators (MFI) within the current concatenation group, if the difference between them is greater than M/N, then there is a concatenation cross-border and a warning signal Conca_Ais will be generated.

After pointer interpretation, the SDH frame data can be used to determine the position of a virtual container (VC) in a SDH frame structure, that is, the SPE signal indication, the position of K4 overhead K4_en or the position of H4 overhead H4_en of a virtual container, and the starting position J1 or V5 of a virtual container (VC); also, the pointer interpretation can indicate whether the pointer of a virtual container has an abnormal indication signal AIS. The foregoing signals and data signal Data are inputted into the concatenated multi-frame detecting circuit 1 to detect data signal Data, position indication signal of K4 overhead K4_en or position indication signal of H4 overhead H4_en, and detect whether there is an abnormal indication signal AIS, thereby determining the locking state of the concatenated multi-frame indicators (MFI); and detect the concatenated indicator (SQ) of each container according to K4 byte or H4 byte, the manner to detect the concatenated indicator (SQ) of a container is: if there are three consecutive identical concatenated indicators, then it is determined that the concatenated indicator is the concatenated indicator of the container.

When determining the locking state of a concatenated multi-frame indicator (MFI), if it is a low order container, the concatenated multi-frame detecting circuit 1 detects the multi-frame allocate sequence (MFAS) in the K4 overhead, if the pattern of a MFAS sequence is detected, then further detects whether the concatenated multi-frame indicator (MFI) in bit 2 of the K4 overhead is continuous, if continuous, then the concatenated multi-frame indicator (MFI) is locked; if not, then the concatenated multi-frame indicator (MFI) of the SDH frame in the container is not locked. If a MFAS sequence is not detected in 64 consecutive K4 overheads, it is considered that the pattern of the K4 overhead is incorrect, which represents that the concatenated multi-frame indicator (MFI) of the container is not locked. Fig 6 and Fig 7 illustrate the transmission pattern of bit 1 and bit 2 in K4 overhead, respectively, where the MFAS of Fig 6 is a 11-bit fixed pattern "01111111110", the Frame count of Fig 7 is the concatenated multi-frame indicator (MFI) of the current container, and Sequence indicator represents the indicator (SQ) of the container in the concatenation group.

If it is a high order container, then the concatenated multi-frame indicator (MFI) in H4 byte will be detected, as shown in Table 1. The H4 byte is used to transmit information about concatenation, wherein the concatenated multi-frame indicator MFI includes MFI2 and MFI1, which is a 12-bit counter, the value of the counter is the concatenated multi-frame indicator MFI of the container, those containers with the same concatenated multi-frame indicator (MFI) are concatenated together. Sequence indicator (SQ) indicates the indicator of each container within the concatenation group, when detecting, if the concatenated multi-frame indicators of three consecutive frames are not continuous, then it is considered that the concatenated multi-frame indicators are not locked; if the concatenated multi-frame indicators of three consecutive frames are continuous, then the concatenated multi-frame indicators are locked.

If there is an abnormal indication signal (AIS) for any one of the containers or the concatenated multi-frame indicators (MFI) are not locked, then it is considered that the concatenated multi-frame indicators of the whole concatenation group are not locked. The locking signal of the concatenated multi-frame indicators (MFI) is denoted by latch_ind, where high level represents a locking state.

**Table 1**

| H4 byte | | | | | | | | 1^{st} multi-frame number | 2^{nd} multiframe number |
|---|---|---|---|---|---|---|---|---|---|
| Bit 1 | Bit 2 | Bit 3 | Bit 4 | Bit 5 | Bit 6 | Bit 7 | Bit 8 | | |
| | | | | 1^{st} multi-frame indicator MFI1 (bits 1-4) | | | | | |
| Sequence indicator MSB ( bits 1-4) | | | | 1 | 1 | 1 | 0 | 14 | n-1 |
| Sequence indicator LSB ( bits 5-8) | | | | 1 | 1 | 1 | 1 | 15 | |
| 2^{nd} multi-frame indicator MFI2 MSB (bits 1-4) | | | | 0 | 0 | 0 | 0 | 0 | n |
| 2^{nd} multi-frame indicator MFI2 LSB (bits 5-8) | | | | 0 | 0 | 0 | 1 | 1 | |
| Reserved ("0000") | | | | 0 | 0 | 1 | 0 | 2 | |
| Reserved ("0000") | | | | 0 | 0 | 1 | 1 | 3 | |
| Reserved ("0000") | | | | 0 | 1 | 0 | 0 | 4 | |
| Reserved ("0000") | | | | 0 | 1 | 0 | 1 | 5 | |
| Reserved ("0000") | | | | 0 | 1 | 1 | 0 | 6 | |
| Reserved ("0000") | | | | 0 | 1 | 1 | 1 | 7 | |
| Reserved ("0000") | | | | 1 | 0 | 0 | 0 | 8 | |
| Reserved ("0000") | | | | 1 | 0 | 0 | 1 | 9 | |
| Reserved ("0000") | | | | 1 | 0 | 1 | 0 | 10 | |
| Reserved ("0000") | | | | 1 | 0 | 1 | 1 | 11 | |
| Reserved ("0000") | | | | 1 | 1 | 0 | 0 | 12 | |
| Reserved ("0000") | | | | 1 | 1 | 0 | 1 | 13 | |
| Sequence indicator SQ MSB ( bits 1-4) | | | | 1 | 1 | 1 | 0 | 14 | |
| Sequence indicator SQ LSB ( bits 5-8) | | | | 1 | 1 | 1 | 1 | 15 | |
| 2^{nd} multi-frame indicator MFI2 MSB (bits 1-4) | | | | 0 | 0 | 0 | 0 | 0 | n+1 |
| 2^{nd} multi-frame indicator MFI2 LSB (bits 5-8) | | | | 0 | 0 | 0 | 1 | 1 | |

The concatenated multi-frame detecting circuit 1 outputs data signal Data, sequence indicator SQ of a container, concatenated multi-frame indicator MFI, locking signal of concatenated multi-frame indicator latch_ind and warning signal Conca_Ais to the concatenated sequence automatic adjusting circuit 2.

There is a strict sequence convention between respective containers in a concatenation group, due to the difference between paths of respective containers during transmission, the different containers within a concatenation group that are sent in certain order at sending terminal may change their sequences when they arriving at receiving terminal. The concatenated sequence automatic adjusting circuit 2 adjusts the sequence of the container according to the concatenated indicator (SQ) of each container in the concatenation group, such that the sequence of the container coincides with the sequence at the sending terminal. For a C-4 container, the concatenated sequence automatic adjusting circuit 2 utilizes a space division cross-matrix and outputs the concatenated indicator the adjusted container in a specified order according to the concatenated indicator (SQ) of the container, for instance, sorts and outputs in an ascending order. For a C-3, C-12, C-11 container or other types of container, the concatenated sequence automatic adjusting circuit 2 utilizes a time division cross-matrix and outputs the concatenated indicator the adjusted container in order according to the concatenated indicator (SQ) of the container, for instance, sorts and outputs in an ascending order.

Two manners can be employed to configure a cross-matrix: program configuration and automatic configuration; the program configuration is a configuration manner in which a Micro Control Unit (MCU) extracts the concatenated indicators (SQ) of respective containers and then performs cross program computation; the automatic configuration employs a hardware circuit to realize the configuration of a cross-matrix directly according the concatenated indicators (SQ). The information for configuration is to sort the concatenated indicators (SQ) of different containers in an ascending order.

The concatenated sequence automatic adjusting circuit 2 outputs the concatenated indicators (SQ) of the adjusted containers, concatenated multi-frame indicator (MFI) and data signal Data to the write control circuit 4.

The write control circuit 4 writes the data of the containers for which sequences have been adjusted into the corresponding partitions of buffer 3 according to different containers and the current concatenated multi-frame indicator (MFI) of the container. The format of the write address is (SQ, MFI, offset), each time one byte of data is written, the offset increments by one, when it reaches the maximal value of the container, the offset resets. The maximal value of capacity depends on the types of the container and equals to the size (in byte) of that type of container.

The buffer 3 is partitioned according to the container and the concatenated multi-frame indicator (MFI), since transmission paths of respective containers within a same concatenation group may differ, the different containers sent simultaneously at the sending terminal will have different path delay when they arriving at the receiving terminal, so at the receiving terminal, in order to restore the concatenated data, a buffer 3 is needed to buffer the data that arrives first in the concatenated data, and data is restored when all the concatenated data has arrived. The buffer 3 can have two levels of partition, the first-level partition is to partition according to the container, that is, data of different containers is stored into different partitions; the second-level partition is to partition according to concatenated multi-frame indicator (MFI). The data of the container with same concatenated multi-frame indicator (MFI) have consistent base addresses in different container buffers.

Since a SDH network does not necessarily work at synchronous state, that is, the clock reference at which the sending and receiving terminal works may not be identical, to adapt to this inconsistence, the SDH network introduces a pointer to adjust the frequency and phase of a container. Since there is pointer adjustment, the relative phase relationship of respective containers that arrive the receiving terminal is constantly changing, so the present invention utilizes a read control relocating and adaptive circuit 5 to adjust the frequency and phase of a container and detect the state of the transmission link, when every one of the container within the concatenation group has resumed from abnormity, it re-determines and reads the starting address of the buffer, such that the output delay of the concatenated data is minimized.

As shown in Fig 5, the input signal of the read control relocating and adaptive circuit 5 includes: the current write address w_Addr of each container outputted by the write control circuit 4, the current read address r_Addr outputted by the read control circuit 6, the locking signal latch_ind of the concatenated multi-frame indicator outputted by the concatenated sequence automatic adjusting circuit 2 and warning signal Conca_Ais; the output signal includes: adjust signal Adjust [1:0], read pointer initialization indication signal r_Addr_rst and read pointer initial address r_Addr_int, which are outputted to the read control circuit 6; the adjust signal Adjust [1:0] can be positive adjustment signal or negative adjustment signal.

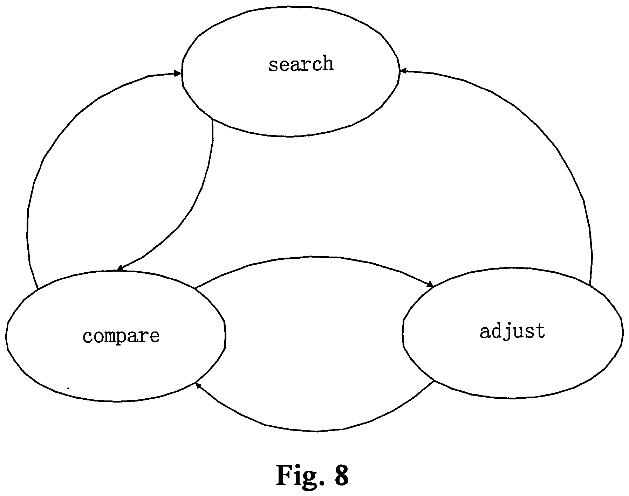

To accurately restore the concatenated data, the read control relocating and adaptive circuit 5 must constantly track the phase relationship of respective containers that are inputted and compare it with the phase of the read data to determine whether the phase of the read data needs to be adjusted. In the present invention, the read control relocating and adaptive circuit 5 completes state adjustment via a state machine, the state machine has three states: search, compare and adjust, its state transition manner is shown in Fig 8: whatever the current state is, if abnormity appears, i.e., when the warning signal Conca_Ais is high or the locking signal latch_ind of the concatenated multi-frame indicator is low, it enters into search state to search the initial state of the concatenation group and sends a reset signal to the read control circuit 6; in compare state, it compares the current write address w_Addr with the current read address r_Addr of the container, if the difference between said write and read addresses exceeds a threshold, it goes into adjust state; in adjust state, it sends an adjust signal Adjust to the read control circuit 6 and then goes into the compare state.

After receiving the adjust signal Adjust outputted from the read control relocating and adaptive circuit 5, the read control circuit 6 generates the read data enable signal Rd_en of each container according to the SDH frame structure and the type the container, and reads data from the buffer 3, the format of the read address is (SQ, MFI, offset), each time one byte of data is read, the offset increments by one, when it reaches the maximal value of the container, the offset resets, thereby completing the restoration of the concatenation. The maximal value of a container depends on the types of the container and equals to the size (in byte) of that type of container.

If the read control circuit 6 receives the read pointer initialization indication signal r_addr_rst (i.e., reset signal) sent by the read control relocating and adaptive circuit 5, it re-initializes the read starting address.

If the read control circuit 6 receives the adjust signal Adjust [1:0] sent by the read control relocating and adaptive circuit 5, it correspondingly generates an adjust operation. The adjust operation performs same adjustment simultaneously on each container within a concatenation group, which includes two manners: positive adjustment and negative adjustment. For a low order container, the positive adjustment refers to stop to read one byte of data at one position after the V3 in each TU12 structure; for a high order container, the positive adjustment refers to consecutively stop to read three bytes of data after the position of H3. For a low order container, the negative adjustment refers to read one byte of data at the position of V3 of each TU12; for a high order container, the negative adjustment refers to read one byte of data at the position of each H3.

Finally, it should be noted that the above embodiments are merely to illustrate the technical solution of the present invention and are not intended to limit the invention. Although the present invention has been described in detail with reference to preferred embodiments, those ordinary skilled in the art should appreciate that modification or equivalent substitution can be made to the technical solution of the invention without departing from the scope of the invention, which should be covered in the claims of the invention.

## Claims

1. A virtual concatenation delay compensation and restoration apparatus, wherein, comprises a concatenated multi-frame detecting circuit (1), a concatenated sequence automatic adjusting circuit (2), a buffer (3), a write control circuit (4), a read control relocating and adaptive circuit (5), and a read control circuit (6);
said concatenated multi-frame detecting circuit (1) is configured to detect the locking of the concatenated multi-frame indicator of a SDH frame, detect the concatenated indicator of a container, and to output the concatenated indicator and the concatenated multi-frame indicator to said concatenated sequence automatic adjusting circuit (2);
said concatenated sequence automatic adjusting circuit (2) is configured to adjust the sequence of the container within a concatenation group according to the concatenated indicator of the container, such that the sequence of the container coincides with the sequence at the sending terminal;
said buffer (3) is partitioned according to the container and the concatenated multi-frame indicator, and is configured to buffer the SDH frames that arrive first within the concatenated SDH frames;
said write control circuit (4) is configured to write the SDH frames within the containers for which sequences have been adjusted into said buffer (3) based on the current concatenated multi-frame indicator of the SDH frame in each container;
said read control relocating and adaptive circuit (5) is configured to adjust the frequency and phase of a container;
said read control circuit (6) is configured to read the SDH frames from said buffer (3) to complete the restoration of concatenation according to the signal outputted by said read control relocating and adaptive circuit (5).

2. The virtual concatenation delay compensation and restoration apparatus of claim 1, wherein said concatenated multi-frame detecting circuit (1) detects whether the concatenated multi-frame indicator of the SDH frame in each container within a concatenation group is continuous, if so, determines the current concatenated multi-frame indicator of the SDH frame in the container.

3. The virtual concatenation delay compensation and restoration apparatus of claim 1 or 2, wherein said concatenated multi-frame detecting circuit (1) also performs concatenation cross-border detection, that is, detects the maximal difference between the current concatenated multi-frame indicators of the SDH frame in different containers in a concatenation group, thereby determining whether the buffer set can meet the requirement; in particular: the concatenated multi-frame detecting circuit (1) polls each frame, if the current concatenated multi-frame indicator of the SDH frame in a container equals to the size of the buffer (3) allocated averagely to each container, then records the maximal concatenated multi-frame indicator and the minimal concatenated multi-frame indicator within the current concatenation group, if the difference between them is greater than the size of the buffer (3) allocated averagely to each container, then there is a concatenation cross-border.

4. The virtual concatenation delay compensation and restoration apparatus of claim 2, wherein said concatenated multi-frame detecting circuit (1) detects data signal, K4 overhead location indication signal or H4 overhead location indication signal, and abnormal indication signal, determines the lock state of the concatenated multi-frame indicator, and detects the concatenated indicator of each container according to the K4 byte or H4 byte.

5. The virtual concatenation delay compensation and restoration apparatus of claim 4, wherein when detecting the concatenated indicator of each container, if there are three consecutive identical concatenated indicators, said concatenated multi-frame detecting circuit (1) determines that said concatenated indicator is the concatenated indicator of the container.

6. The virtual concatenation delay compensation and restoration apparatus of claim 4, wherein when determining the lock state of a concatenated multi-frame indicator, if it is a low order container, said concatenated multi-frame detecting circuit (1) detects whether there is a multi-frame allocate sequence in the K4 overhead, if a multi-frame allocate sequence is detected, then continues to detect whether the concatenated multi-frame indicator in bit2 of the K4 byte is continuous, where continuous represents locked; if not continuous, then the concatenated multi-frame indicator of that container is not locked; if a MFAS is not found in 64 consecutive K4 bytes, it is considered that the pattern of the K4 byte is incorrect, which represents that the concatenated multi-frame indicator of that container is not locked.

7. The virtual concatenation delay compensation and restoration apparatus of claim 4, wherein when determining the lock state of a concatenated multi-frame indicator, if it is a high order container, said concatenated multi-frame detecting circuit (1) detects whether the concatenated multi-frame indicator in H4 byte is continuous, if the concatenated multi-frame indicators of three consecutive frames are not continuous, then it is considered that the concatenated multi-frame indicators are not locked; if the concatenated multi-frame indicators of three consecutive frames are continuous, then the concatenated multi-frame indicators are locked.

8. The virtual concatenation delay compensation and restoration apparatus of claim 4, wherein if said concatenated multi-frame detecting circuit (1) detects an abnormal indication signal in any one of the containers or detects that the concatenated multi-frame indicators are not locked, then it is considered that the concatenated multi-frame indicators of the whole concatenation group are not locked.

9. The virtual concatenation delay compensation and restoration apparatus of claim 1, wherein said concatenated sequence automatic adjusting circuit (2) utilizes a space division cross-matrix and outputs the concatenated indicators of the adjusted containers in a given order based on the inputted concatenated indicators of the C-4 container.

10. The virtual concatenation delay compensation and restoration apparatus of claim 1, wherein said concatenated sequence automatic adjusting circuit (2) utilizes a time division cross-matrix and outputs the concatenated indicators of the adjusted containers in a given order based on the inputted concatenated indicators of the C-3, C-12 or C-11 container.

11. The virtual concatenation delay compensation and restoration apparatus of claim 9 or 10, wherein said cross-matrix utilizes an automatic configuration, that is, utilizes a hardware circuit to directly realize the cross-matrix according to the concatenated indicator, in particular: a switch circuit is employed, if the concatenated multi-frame indicators of the whole concatenation group are not locked, then the overall switch circuit is reset; if entering into locked state, then the indicators are sorted in an ascending order according to the concatenated indicators of the containers in the concatenation group, and the sort result is used to control the switch circuit to accomplish automatic sorting of the container.

12. The virtual concatenation delay compensation and restoration apparatus of claim 1, wherein said read control relocating and adaptive circuit (5) also detects the state of the transmission link, when every one of the container within the concatenation group has resumed from abnormity, it re-determines the starting address to read buffer data.

13. The virtual concatenation delay compensation and restoration apparatus of claim 1, wherein said read control relocating and adaptive circuit (5) completes state adjustment via a state machine, said state machine has three states: search, compare and adjust, its state transition manner is: whatever the current state is, if there is a warning, it enters into search state to search the initial state of the concatenation group and sends a reset signal to the read control circuit (6), when the warning disappears, it goes into compare state; in compare state, it compares the write address of the current container with the current read address, if the difference between said write and read addresses exceeds a threshold, it goes into adjust state; the adjust state sends an adjust signal to the read control circuit (6) and then goes into compare state.

14. The virtual concatenation delay compensation and restoration apparatus of claim 1, wherein said read control circuit (6) generates read data enable signal of each container according to the SDH frame structure and the category of the container, the format of the read address is (concatenated indicator, concatenated multi-frame indicator, offset), each time one byte of data is read out, the offset increments by one, when it reaches the maximal value of the container, the offset resets.

15. The virtual concatenation delay compensation and restoration apparatus of claim 1, wherein said read control circuit (6) re-initializes the starting address to read data after it receives the reset signal sent by said read control relocating and adaptive circuit (5).

16. The virtual concatenation delay compensation and restoration apparatus of claim 1, wherein said read control circuit (6) generates an adjust operation after it receives the adjust signal sent by said read control relocating and adaptive circuit (5), there are two kinds of adjustment:
positive adjustment and negative adjustment; for a low order container, said positive adjustment refers to stop to read one byte of data at one position after the V3 in each TU12 structure; said negative adjustment refers to read one byte of data at the position of V3 in each TU12 structure; and for a high order container, said positive adjustment refers to consecutively stop to read three bytes of data after the position of H3; said negative adjustment refers to read one byte of data at the position of each H3.

## Patentansprüche

1. Vorrichtung zum Kompensieren und Wiederherstellen einer virtuellen Verkettungsverzögerung, wobei diese eine verkettete Multi-Frame-Erkennungsschaltung (1), eine verkettete automatische Sequenzanpassungsschaltung (2), einen Puffer (3), eine Schreibsteuerschaltung (4), eine adaptive Lesersteuerverlagerungsschaltung (5) und eine Lesesteuerschaltung (6) umfasst;
wobei die verkettete Multi-Frame-Erkennungsschaltung (1) so konfiguriert ist, dass sie das Sperren des verketteten Multi-Frame-Indikators eines SDH-Frames erkennt, den verketteten Indikator eines Containers erkennt und den verketteten Indikator und den verketteten Multi-Frame-Indikator an die verkettete automatische Sequenzanpassungsschaltung (2) ausgibt;
die verkettete automatische Sequenzanpassungsschaltung (2) so konfiguriert ist, dass sie die Sequenz des Containers innerhalb einer Verkettungsgruppe gemäß dem verketteten Indikator des Containers anpasst, so dass die Sequenz des Containers mit der Sequenz an der Sendeendstelle übereinstimmt;
der Puffer (3) gemäß dem Container und dem verketteten Multi-Frame-Indikator partitioniert und so konfiguriert ist, dass er die SDH-Frames, die innerhalb der verketteten SDH-Frames zuerst ankommen, puffert;
die Schreibsteuerschaltung (4) so konfiguriert ist, dass sie die SDH-Frames innerhalb der Container, deren Sequenzen angepasst wurden, auf Basis des aktuellen verketteten Multi-Frame-Indikators des SDH-Frames in jedem Container in den Puffer (3) schreibt;
die adaptive Lesesteuerverlagerungsschaltung (5) so konfiguriert ist, dass sie die Frequenz und die Phase eines Containers anpasst;
die Lesesteuerschaltung (6) so konfiguriert ist, dass sie die SDH-Frames aus dem Puffer (3) liest, um die Wiederherstellung der Verkettung gemäß dem von der adaptiven Lesesteuerverlagerungsschaltung (5) ausgegebenen Signal zu vervollständigen.

2. Vorrichtung zum Kompensieren und Wiederherstellen einer virtuellen Verkettungsverzögerung nach Anspruch 1, wobei die verkettete Multi-Frame-Erkennungsschaltung (1) erkennt, ob der verkettete Multi-Frame-Indikator des SDH-Frames in jedem Container innerhalb einer Verkettungsgruppe zusammenhängend ist, und ist dies der Fall, den aktuellen verketteten Multi-Frame-Indikator des SDH-Frames im Container ermittelt.

3. Vorrichtung zum Kompensieren und Wiederherstellen einer virtuellen Verkettungsverzögerung nach Anspruch 1 oder 2, wobei die verkettete Multi-Frame-Erkennungsschaltung (1) auch eine grenzüberschreitende Verkettungserkennung durchführt, d. h., den maximalen Unterschied zwischen den aktuellen verketteten Multi-Frame-Indikatoren des SDH-Frames in unterschiedlichen Containern in einer Verkettungsgruppe erkennt, wodurch ermittelt wird, ob der eingestellte Puffer die Anforderung erfüllen kann; insbesondere: ruft die verkettete Multi-Frame-Erkennungsschaltung (1) jedes Frame ab, wenn der aktuelle verkettete Multi-Frame-Indikator des SDH-Frames in einem Container der Größe des Puffers (3) gleicht, die jedem Container im Durchschnitt zugewiesen wird, zeichnet sie sodann den maximalen verketteten Multi-Frame-Indikator und den minimalen verketteten Multi-Frame-Indikator innerhalb der aktuellen Verkettungsgruppe auf, wenn der Unterschied zwischen ihnen größer als die Größe des Puffers (3) ist, die jedem Container im Durchschnitt zugewiesen wird, gibt es eine Verkettungsgrenzüberschreitung.

4. Vorrichtung zum Kompensieren und Wiederherstellen einer virtuellen Verkettungsverzögerung nach Anspruch 2, wobei die verkettete Multi-Frame-Erkennungsschaltung (1) ein Datensignal, K4-Overhead-Positionsindikationssignal oder H4-Overhead-Positionsindikationssignal und ein anomales Indikationssignal erkennt, den Sperrstatus des verketteten Multi-Frame-Indikators ermittelt und den verketteten Indikator jedes Containers gemäß dem K4-Byte oder H4-Byte erkennt.

5. Vorrichtung zum Kompensieren und Wiederherstellen einer virtuellen Verkettungsverzögerung nach Anspruch 4, wobei die verketteten Multi-Frame-Erkennungsschaltung (1) beim Erkennen des verketteten Indikators jedes Containers im Fall von drei aufeinanderfolgenden identischen verketteten Indikatoren ermittelt, dass der verkettete Indikator der verkettete Indikator des Containers ist.

6. Vorrichtung zum Kompensieren und Wiederherstellen einer virtuellen Verkettungsverzögerung nach Anspruch 4, wobei die verkettete Multi-Frame-Erkennungsschaltung (1) beim Ermitteln des Sperrstatus eines verketteten Multi-Frame-Indikators im Fall eines Containers niedriger Ordnung erkennt, ob im K4-Overhead eine Multi-Frame-Zuweisungssequenz vorhanden ist, wenn eine Multi-Frame-Zuweisungssequenz erkannt wird, sodann fortsetzt und erkennt, ob der verkettete Multi-Frame-Indikator in bit2 des K4-Byte zusammenhängend ist, wobei zusammenhängend gesperrt bedeutet; ist dieser nicht zusammenhängend, ist der verkettete Multi-Frame-Indikator dieses Containers sodann nicht gesperrt; wenn in 64 aufeinanderfolgenden K4-Bytes keine MFAS gefunden wird, wird erachtet, dass das Muster des K4-Bytes falsch ist, was bedeutet, dass der verkettete Multi-Frame-Indikator dieses Containers nicht gesperrt ist.

7. Vorrichtung zum Kompensieren und Wiederherstellen einer virtuellen Verkettungsverzögerung nach Anspruch 4, wobei die verkettete Multi-Frame-Erkennungsschaltung (1) beim Ermitteln des Sperrstatus eines verketteten Multi-Frame-Indikators im Fall eines Containers hoher Ordnung erkennt, ob der verkettete Multi-Frame-Indikator im H4-Byte zusammenhängend ist, wenn die verketteten Multi-Frame-Indikatoren von drei aufeinanderfolgenden Frames nicht zusammenhängend sind, wird sodann erachtet, dass die verketteten Multi-Frame-Indikatoren nicht gesperrt sind; wenn die verketteten Multi-Frame-Indikatoren von drei aufeinanderfolgenden Frames zusammenhängend sind, sind die verketteten Multi-Frame-Indikatoren sodann gesperrt.

8. Vorrichtung zum Kompensieren und Wiederherstellen einer virtuellen Verkettungsverzögerung nach Anspruch 4, wobei, wenn die verkettete Multi-Frame-Erkennungsschaltung (1) ein anomales Indikationssignal in einem beliebigen der Container erkennt oder erkennt, dass die verketteten Multi-Frame-Indikatoren nicht gesperrt sind, wird sodann erachtet, dass die verketteten Multi-Frame-Indikatoren der gesamten Verkettungsgruppe nicht gesperrt sind.

9. Vorrichtung zum Kompensieren und Wiederherstellen einer virtuellen Verkettungsverzögerung nach Anspruch 1, wobei die verkettete automatische Sequenzanpassungsschaltung (2) eine Raumteilungskreuzmatrix verwendet und die verketteten Indikatoren der angepassten Container in einer bestimmten Reihenfolge auf Basis der eingegebenen verketteten Indikatoren des C-4-Containers ausgibt.

10. Vorrichtung zum Kompensieren und Wiederherstellen einer virtuellen Verkettungsverzögerung nach Anspruch 1, wobei die verkettete automatische Sequenzanpassungsschaltung (2) eine Zeitteilungskreuzmatrix verwendet und die verketteten Indikatoren der angepassten Container in einer bestimmten Ordnung auf Basis der eingegebenen verketteten Indikatoren des C-3-, C-12- oder C-11-Containers ausgibt.

11. Vorrichtung zum Kompensieren und Wiederherstellen einer virtuellen Verkettungsverzögerung nach Anspruch 9 oder 10, wobei die Kreuzmatrix eine automatische Konfiguration verwendet, d. h., eine Hardwareschaltung verwendet, um die Kreuzmatrix gemäß dem verketteten Indikator direkt umzusetzen, insbesondere: wird ein Schaltkreis verwendet, wenn die verketteten Multi-Frame-Indikatoren der gesamten Verkettungsgruppe nicht gesperrt sind, wird sodann der gesamte Schaltkreis zurückgesetzt; bei Eintritt in einen gesperrten Status werden die Indikatoren sodann in aufsteigender Reihenfolge gemäß den verketteten Indikatoren des Containers in der Verkettungsgruppe sortiert und das Sortierungsergebnis wird verwendet, um den Schaltkreis so zu steuern, dass eine automatische Sortierung des Containers erzielt wird.

12. Vorrichtung zum Kompensieren und Wiederherstellen einer virtuellen Verkettungsverzögerung nach Anspruch 1, wobei die adaptive Lesesteuerverlagerungsschaltung (5) auch den Status der Übertragungsverbindung erkennt, wenn jeder der Container innerhalb der Verkettungsgruppe nach der Anomalie wiederaufgenommen wurde, ermittelt sie die Startadresse neu, um Pufferdaten zu lesen.

13. Vorrichtung zum Kompensieren und Wiederherstellen einer virtuellen Verkettungsverzögerung nach Anspruch 1, wobei die adaptive Lesersteuerverlagerungsschaltung (5) eine Statusanpassung über eine Statusmaschine vervollständigt, wobei die Statusmaschine drei Status aufweist: Suchen, Vergleichen und Anpassen, wobei ihre Statusübergangsmethode ist: unabhängig vom aktuellen Status geht sie, wenn eine Warnung vorliegt, in den Suchstatus über, um nach dem Ausgangsstatus der Verkettungsgruppe zu suchen, und sendet ein Zurücksetzungssignal an die Lesesteuerschaltung (6), wenn die Warnung verschwindet, sie geht in einen Vergleichsstatus über; im Vergleichsstatus vergleicht sie die Schreibadresse des aktuellen Containers mit der aktuellen Leseadresse, wenn der Unterschied zwischen der Schreib- und der Leseadresse einen Schwellenwert überschreitet, geht sie in einen Anpassungsstatus über; der Anpassungsstatus sendet ein Anpassungssignal an die Lesesteuerschaltung (6) und geht danach in den Vergleichsstatus über.

14. Vorrichtung zum Kompensieren und Wiederherstellen einer virtuellen Verkettungsverzögerung nach Anspruch 1, wobei die Lesesteuerschaltung (6) ein Lesedatenaktivierungssignal jedes Containers gemäß der SDH-Frame-Struktur und der Kategorie des Containers erzeugt, das Format der Leseadresse ist (verketteter Indikator, verketteter Multi-Frame-Indikator, Offset), jedes Mal, wenn ein Datenbyte ausgelesen wird, der Offset um eins erhöht wird, wenn er den maximalen Wert des Containers erreicht, der Offset zurückgesetzt wird.

15. Vorrichtung zum Kompensieren und Wiederherstellen einer virtuellen Verkettungsverzögerung nach Anspruch 1, wobei die Lesesteuerschaltung (6) die Ausgangsadresse zum Lesen von Daten neu initialisiert, nachdem sie das von der adaptiven Lesesteuerverlagerungsschaltung (5) gesendete Zurücksetzungssignal empfangen hat.

16. Vorrichtung zum Kompensieren und Wiederherstellen einer virtuellen Verkettungsverzögerung nach Anspruch 1, wobei die Lesesteuerschaltung (6) einen Anpassungsbetrieb erzeugt, nachdem sie das von der adaptiven Lesesteuerverlagerungsschaltung (5) gesendete Anpassungssignal empfangen hat, wobei es zwei Anpassungsarten gibt: positive Anpassung und negative Anpassung; bei einem Container niedriger Ordnung bezieht sich die positive Anpassung auf das Stoppen, um ein Datenbyte an einer Position nach dem V3 in jeder TUI2-Struktur zu lesen; bezieht sich die negative Anpassung auf das Lesen eines Datenbytes an der Position von V3 in jeder TUI2-Struktur; und bei einem Container hoher Ordnung bezieht sich die positive Anpassung auf das darauffolgende Stoppen, um drei Datenbytes nach der Position von H3 zu lesen; bezieht sich die negative Anpassung auf das Lesen eines Datenbytes an der Position jedes H3.

## Revendications

1. Appareil de restauration et de compensation de retard de concaténation virtuelle, dans lequel l'appareil comprend un circuit de détection multitrame concaténé (1), un circuit d'ajustement automatique de séquence concaténé (2), une mémoire tampon (3), un circuit de commande d'écriture (4), un circuit adaptatif et de relocalisation de commande de lecture (5) et un circuit de commande de lecture (6) ;
ledit circuit de détection multitrame concaténé (1) est configuré de manière à détecter le verrouillage de l'indicateur multitrame concaténé d'une trame de hiérarchie SDH, à détecter l'indicateur concaténé d'un conteneur, et à délivrer en sortie l'indicateur concaténé et l'indicateur multitrame concaténé audit circuit d'ajustement automatique de séquence concaténé (2) ;
ledit circuit d'ajustement automatique de séquence concaténé (2) est configuré de manière à ajuster la séquence du conteneur au sein d'un groupe de concaténations selon l'indicateur concaténé du conteneur, de sorte que la séquence du conteneur coïncide avec la séquence au niveau du terminal émetteur ;
ladite mémoire tampon (3) est partitionnée selon le conteneur et l'indicateur multitrame concaténé, et est configurée de manière à mettre en mémoire tampon les trames de hiérarchie SDH qui arrivent en premier dans les trames de hiérarchie SDH concaténées ;
ledit circuit de commande d'écriture (4) est configuré de manière à écrire les trames de hiérarchie SDH au sein des conteneurs dont les séquences ont été ajustées dans ladite mémoire tampon (3) sur la base de l'indicateur multitrame concaténé en cours de la trame de hiérarchie SDH dans chaque conteneur ;
ledit circuit adaptatif et de relocalisation de commande de lecture (5) est configuré de manière à ajuster la fréquence et la phase d'un conteneur ;
ledit circuit de commande de lecture (6) est configuré de manière à lire les trames de hiérarchie SDH à partir de ladite mémoire tampon (3) afin d'achever la restauration de concaténation selon le signal délivré en sortie par ledit circuit adaptatif et de relocalisation de commande de lecture (5).

2. Appareil de restauration et de compensation de retard de concaténation virtuelle selon la revendication 1, dans lequel ledit circuit de détection multitrame concaténé (1) détecte si l'indicateur multitrame concaténé de la trame de hiérarchie SDH dans chaque conteneur au sein d'un groupe de concaténations est continu, et le cas échéant, détermine l'indicateur multitrame concaténé en cours de la trame de hiérarchie SDH dans le conteneur.

3. Appareil de restauration et de compensation de retard de concaténation virtuelle selon la revendication 1 ou 2, dans lequel ledit circuit de détection multitrame concaténé (1) met également en oeuvre une détection transfrontalière de concaténation, à savoir, il détecte la différence maximale entre les indicateurs multitrames concaténés en cours de la trame de hiérarchie SDH dans différents conteneurs dans un groupe de concaténations, déterminant ainsi si la mémoire tampon définie peut répondre à l'exigence ; en particulier : le circuit de détection multitrame concaténé (1) interroge chaque trame, si l'indicateur multitrame concaténé en cours de la trame de hiérarchie SDH dans un conteneur est égal à la taille de la mémoire tampon (3) affectée en moyenne à chaque conteneur, il enregistre ensuite l'indicateur multitrame concaténé maximal et l'indicateur multitrame concaténé minimal au sein du groupe de concaténations en cours, si la différence entre eux est supérieure à la taille de la mémoire tampon (3) affectée en moyenne à chaque conteneur, alors il existe une concaténation transfrontalière.

4. Appareil de restauration et de compensation de retard de concaténation virtuelle selon la revendication 2, dans lequel ledit circuit de détection multitrame concaténé (1) détecte un signal de données, un signal d'indication d'emplacement de surdébit K4 ou un signal d'indication d'emplacement de surdébit H4, ainsi qu'un signal d'indication anormal, il détermine l'état de verrouillage de l'indicateur multitrame concaténé, et il détecte l'indicateur concaténé de chaque conteneur selon l'octet K4 ou l'octet H4.

5. Appareil de restauration et de compensation de retard de concaténation virtuelle selon la revendication 4, dans lequel, lors de la détection de l'indicateur concaténé de chaque conteneur, s'il existe trois indicateurs concaténés identiques consécutifs, ledit circuit de détection multitrame concaténé (1) détermine que ledit indicateur concaténé est l'indicateur concaténé du conteneur.

6. Appareil de restauration et de compensation de retard de concaténation virtuelle selon la revendication 4, dans lequel, lors de la détermination de l'état de verrouillage d'un indicateur multitrame concaténé, s'il s'agit d'un conteneur d'ordre faible, ledit circuit de détection multitrame concaténé (1) détecte s'il existe une séquence d'affectation multitrame dans le signal de surdébit K4, si une séquence d'affectation multitrame est détectée, alors il continue de détecter si l'indicateur multitrame concaténé dans le bit 2 de l'octet K4 est continu, où « continu » signifie « verrouillé » ; si l'indicateur n'est pas « continu », alors l'indicateur multitrame concaténé de ce conteneur n'est pas verrouillé ; si un signal MFAS n'est pas rencontré dans 64 octets K4 consécutifs, il est considéré que le motif de l'octet K4 est incorrect, ce qui signifie que l'indicateur multitrame concaténé de ce conteneur n'est pas verrouillé.

7. Appareil de restauration et de compensation de retard de concaténation virtuelle selon la revendication 4, dans lequel, lors de la détermination de l'état de verrouillage d'un indicateur multitrame concaténé, s'il s'agit d'un conteneur d'ordre élevé, ledit circuit de détection multitrame concaténé (1) détecte si l'indicateur multitrame concaténé dans l'octet H4 est continu, si les indicateurs multitrames concaténés de trois trames consécutifs ne sont pas continus, alors il est considéré que les indicateurs multitrames concaténés ne sont pas verrouillés ; si les indicateurs multitrames concaténés de trois trames consécutifs sont continus, les indicateurs multitrames concaténés sont verrouillés.

8. Appareil de restauration et de compensation de retard de concaténation virtuelle selon la revendication 4, dans lequel si ledit circuit de détection multitrame concaténé (1) détecte un signal d'indication anormal dans l'un quelconque des conteneurs, ou s'il détecte que les indicateurs multitrames concaténés ne sont pas verrouillés, alors il est considéré que les indicateurs multitrames concaténés du groupe de concaténations dans son ensemble ne sont pas verrouillés.

9. Appareil de restauration et de compensation de retard de concaténation virtuelle selon la revendication 1, dans lequel ledit circuit d'ajustement automatique de séquence concaténé (2) utilise une matrice croisée par répartition spatiale et délivre en sortie les indicateurs concaténés des conteneurs ajustés dans un ordre donné sur la base des indicateurs concaténés appliqués en entrée du conteneur C-4.

10. Appareil de restauration et de compensation de retard de concaténation virtuelle selon la revendication 1, dans lequel ledit circuit d'ajustement automatique de séquence concaténé (2) utilise une matrice croisée par répartition dans le temps et délivre en sortie les indicateurs concaténés des conteneurs ajustés dans un ordre donné sur la base des indicateurs concaténés appliqués en entrée du conteneur C-3, C-12, ou C-11.

11. Appareil de restauration et de compensation de retard de concaténation virtuelle selon la revendication 9 ou 10, dans lequel ladite matrice croisée utilise une configuration automatique, à savoir, elle utilise un circuit matériel pour réaliser directement la matrice croisée selon l'indicateur concaténé, en particulier : un circuit de commutateur est employé, si les indicateurs multitrames concaténés du groupe de concaténations dans son ensemble ne sont pas verrouillés, alors le circuit de commutateur dans son ensemble est réinitialisé ; si un état verrouillé est vérifié, alors les indicateurs sont triés dans un ordre ascendant selon les indicateurs concaténés des conteneurs dans le groupe de concaténations, et le résultat du tri est utilisé en vue de commander au circuit de commutateur d'accomplir un tri automatique du conteneur.

12. Appareil de restauration et de compensation de retard de concaténation virtuelle selon la revendication 1, dans lequel ledit circuit adaptatif et de relocalisation de commande de lecture (5) détecte également l'état de la liaison de transmission, lorsque la totalité du conteneur dans le groupe de concaténations a repris suite à une anomalie, il détermine à nouveau l'adresse de début en vue de lire des données de mémoire tampon.

13. Appareil de restauration et de compensation de retard de concaténation virtuelle selon la revendication 1, dans lequel ledit circuit adaptatif et de relocalisation de commande de lecture (5) achève un ajustement d'état par l'intermédiaire d'un automate à états, dans lequel ledit automate à états présente trois états : à savoir un état de « recherche », un état de « comparaison » et un état « d'ajustement », et son mode de transition d'état est comme suit :
quel que soit l'état en cours, s'il existe un avertissement, il entre dans l'état de recherche en vue de rechercher l'état initial du groupe de concaténations, et il envoie un signal de réinitialisation au circuit de commande de lecture (6), lorsque l'avertissement disparaît, il passe à l'état de comparaison ; dans l'état de comparaison, il compare l'adresse d'écriture du conteneur en cours à l'adresse de lecture en cours, si la différence entre lesdites adresses de lecture et d'écriture dépasse un seuil, il passe à l'état d'ajustement ; l'état d'ajustement envoie un signal d'ajustement au circuit de commande de lecture (6) et passe ensuite à l'état de comparaison.

14. Appareil de restauration et de compensation de retard de concaténation virtuelle selon la revendication 1, dans lequel ledit circuit de commande de lecture (6) génère un signal d'activation de données de lecture de chaque conteneur selon la structure de trame de hiérarchie SDH et la catégorie du conteneur, dans lequel le format de l'adresse de lecture est (indicateur concaténé, indicateur multitrame concaténé, décalage), chaque fois qu'un octet de données est lu, le décalage est incrémenté de « un », et lorsqu'il atteint la valeur maximale du conteneur, le décalage est réinitialisé.

15. Appareil de restauration et de compensation de retard de concaténation virtuelle selon la revendication 1, dans lequel ledit circuit de commande de lecture (6) réinitialise l'adresse de début sur des données lues après qu'il a reçu le signal de réinitialisation envoyé par ledit circuit adaptatif et de relocalisation de commande de lecture (5).

16. Appareil de restauration et de compensation de retard de concaténation virtuelle selon la revendication 1, dans lequel ledit circuit de commande de lecture (6) génère une opération d'ajustement dès lors qu'il a reçu le signal d'ajustement envoyé par ledit circuit adaptatif et de relocalisation de commande de lecture (5), dans lequel il existe deux types d'ajustements : un ajustement positif et un ajustement négatif ; pour un conteneur d'ordre faible, ledit ajustement positif fait référence à l'arrêt de la lecture d'un octet de données à une position après l'octet V3 dans chaque structure TU12 ; ledit ajustement négatif fait référence à la lecture d'un octet de données à la position de V3 dans chaque structure TU12 ; et pour un conteneur d'ordre élevé, ledit ajustement positif fait référence à l'arrêt consécutif de la lecture de trois octets de données après la position de H3 ; ledit ajustement négatif fait référence à la lecture d'un octet de données à la position de chaque octet H3.
